# EUROPÄISCHE PATENTANMELDUNG

(11) **EP 1 610 020 A2**
(43) Veröffentlichungstag der Anmeldung: **28.12.2005**
(21) Anmeldenummer: 05011887.6
(22) Anmeldetag: 02.06.2005
(51) Int. Cl.: F16D 25/08

(54) **Aktor zur Betätigung einer Doppelkupplung**

(30) Priorität: 21.06.2004 US 581549 P
(71) Anmelder: LuK Lamellen und Kupplungsbau Beteiligungs KG, 77813 Bühl (DE)
(72) Erfinder: Hemphill, Jeffrey, 44321 Copley (US)

(57) **Zusammenfassung**

Bei einem Aktor zur Betätigung einer Doppelkupplung, wobei die Doppelkupplung eine erste Tellerfeder (51) mit einem ersten Ausrücklager (53) und eine zweite Tellerfeder (52) mit einem zweiten Ausrücklager (54) umfasst, wobei der Innendurchmesser des zweiten Ausrücklagers größer ist als der Innendurchmesser des ersten Ausrücklagers wird der Fertigungsaufwand für einen Aktor zur Betätigung einer Doppelkupplung reduziert, indem der Aktor einen ersten Antrieb (55) zur Erzielung einer ersten axialen Relativbewegung zwischen zwei in Umfangsrichtung verdrehbar angeordneten Bauteilen (3,8), wobei zumindest ein bezüglich des ersten Bauteiles fixiertes Eingriffsmittel (32) zwischen zumindest zwei benachbarte Windungen einer dem zweiten Bauteil (3) drehfest zugeordneten gewundenen ersten Feder (2) eingreift und zumindest ein Bauteil gegenüber dem anderen drehangetrieben ist, sowie einen zweiten Antrieb zur Erzielung einer zweiten axialen Relativbewegung zwischen zwei in Umfangsrichtung verdrehbar angeordneten dritten und vierten Bauteilen (108,103), wobei zumindest ein bezüglich des dritten Bauteiles (108) fixiertes Eingriffsmittel (132) zwischen zumindest zwei benachbarte Windungen einer dem vierten Bauteil (103) drehfest zugeordneten gewundenen zweiten Feder (102) eingreift und zumindest ein Bauteil gegenüber dem anderen drehangetrieben ist, umfasst.

## Beschreibung

Die Erfindung betrifft einen Aktor zur Betätigung einer Doppelkupplung, wobei die Doppelkupplung eine erste Tellerfeder mit einem ersten Ausrücklager und eine zweite Tellerfeder mit einem zweiten Ausrücklager umfasst, wobei der Innendurchmesser des zweiten Ausrücklagers größer ist als der Innendurchmesser des ersten Ausrücklagers

Doppelkupplungen werden heute in der Regel mit hydraulischen Zentralausrücksystemen betätigt, wobei geberseitig elektrische Aktoren verwendet werden. Nachteilig daran ist der große Fertigungsaufwand für das gesamte hydraulische und elektrische System.

Aufgabe der vorliegenden Erfindung ist es daher, den Fertigungsaufwand für einen Aktor zur Betätigung einer Doppelkupplung zu reduzieren.

Dieses Problem wird gelöst durch einen Aktor zur Betätigung einer Doppelkupplung, wobei die Doppelkupplung eine erste Tellerfeder mit einem ersten Ausrücklager und eine zweite Tellerfeder mit einem zweiten Ausrücklager umfasst und wobei der Aktor einen ersten Antrieb zur Erzielung einer ersten axialen Relativbewegung zwischen zwei in Umfangsrichtung verdrehbar angeordneten Bauteilen, wobei zumindest ein bezüglich des ersten Bauteiles fixiertes Eingriffsmittel zwischen zumindest zwei benachbarte Windungen einer dem zweiten Bauteil drehfest zugeordneten gewundenen ersten Feder eingreift und zumindest ein Bauteil gegenüber dem anderen drehangetrieben ist, sowie einen zweiten Antrieb zur Erzielung einer zweiten axialen Relativbewegung zwischen zwei in Umfangsrichtung verdrehbar angeordneten dritten und vierten Bauteilen , wobei zumindest ein bezüglich des dritten Bauteiles fixiertes Eingriffsmittel zwischen zumindest zwei benachbarte Windungen einer dem vierten Bauteil drehfest zugeordneten gewundenen zweiten Feder eingreift und zumindest ein Bauteil gegenüber dem anderen drehangetrieben ist, umfasst. Es handelt sich also um zwei koaxial zueinander angeordnete Axialantriebe, die unmittelbar elektrisch betätigt werden, wobei keine weiteren außerhalb der Kupplungsglocke angeordnete Antriebselemente -abgesehen von einer notwendigen Steuerung und Leistungselektronik- notwendig sind. In ihrer Funktion entsprechen sich das erste und dritte bzw. das zweite und vierte Bauteil. Der Drehantrieb erfolgt durch bürstenlose Motoren. Der Innendurchmesser des zweiten Ausrücklagers ist vorzugsweise größer ist als der Innendurchmesser des ersten Ausrücklagers, sodass der Aktor bei der Montage durch die bereits an den Tellerfedern angeordneten Ausrücklager geschoben werden kann. Dabei ist es besonders vorteilhaft, wenn der größte Außendurchmesser des ersten Axialantriebes kleiner ist als der Innendurchmesser des zweiten Ausrücklagers.

In einer Weiterbildung des Aktors ist vorgesehen, dass das erste Bauteil eine zylinderförmige Hülse umfasst, die gegenüber einer Kupplungsglocke drehbar gelagert ist und die kupplungsglockenseitig eine sich radial erstreckende Rotorwicklung umfasst, die zusammen mit einer Statorwicklung einen elektrischen Antrieb bildet.

Die Begriffe Rotorwicklung und Statorwicklung werden hier synonym für alle erdenklichen Ausgestaltungen elektrischer Gleichstromantriebe benutzt. Beispielsweise kann der Rotor wie in diesem Fall eine bestromte Wicklung umfassen, der Stator kann ein Permanentmagnet oder eine Spule sein. Sowohl für den Permanentmagneten als auch die Spule wird hier der Begriff Statorwicklung verwendet. Gleiches gilt für die Rotorwicklung, auch diese kann beispielsweise ein im Falle eines bürstenlosen Antriebes ein permanentmagnet sein.

Die Rotorwicklung ist mit einem Kommutator verbunden und wird von Bürsten mit Gleichstrom versorgt. Der Anker der Statorwicklung besteht vorzugsweise aus einem eisenfreien Kern, sodass dieser keine natürliche Polung aufweist und dadurch eine große Auflösung erzielt wird. Unter kupplungsglockenseitig wird dabei die den Kupplungsbelägen abgewandte und dem Getriebeeingang und damit der Kupplungsglocke zugewandte Seite verstanden. Als drehbare Lagerung wird hier eine Lagerung verstanden, die eine Rotation um die Rotationsachse der Kupplungen und damit der Rotationsachse der Kurbelwelle eines Antriebsmotors und der Getriebeeingangswelle erlaubt. Diese Ausführungsform des elektrischen Antriebes ist in axialer besonders platzsparend aufgebaut.

In einer Weiterbildung des Aktors ist vorgesehen, dass dieser ein Trägerelement umfasst, welches starr mit der Kupplungsglocke verbunden ist. An dem Trägerelement sind alle weiteren Unterbaugruppen angeordnet, es bildet also eine Art Skelett für die Montage der weiteren Baugruppen.

In einer Weiterbildung des Aktors ist vorgesehen, dass das Trägerelement Mittel umfasst, die das zweite Bauteil gegenüber einer Rotation festlegen. Die Mittel, die das zweite Bauteil gegenüber einer Rotation festlegen, sind vorzugsweise eine Langlochbohrung in dem Trägerelement und eine Nase an dem ersten Bauteil.

In einer Weiterbildung des Aktors ist vorgesehen, dass der zweite Antrieb zur Erzielung einer axialen Bewegung eine zweite Rotorwicklung umfasst, die sich in axialer Richtung entlang der Innenseite des dritten Bauteiles erstreckt. Die zweite Rotorwicklung bildet vorzugsweise mit einer zweiten Statorwicklung, die an dem Trägerelement angeordnet ist, einen elektrischen Antrieb. Der elektrische Antrieb ist ein bürstenloser Elektromotor. Für die Begriffe Rotorwicklung und Statorwicklung gilt hier das bezüglich des ersten Axialantriebes oben gesagte.

In einer Weiterbildung des Aktors ist vorgesehen, dass sich das zweite Bauteil mit einem Dichtungsschuh an der zylinderförmigen Hülse abstützt. Ebenso kann sich das vierte Bauteil mit einem zweiten Dichtungsschuh an dem dritten Bauteil abstützen. Die Dichtungsschuhe sind sowohl in axialer Richtung als auch in Umfangsrichtung verschiebbar gegenüber der zylinderförmigen Hülse bzw. dem dritten Bauteil verschiebbar, sodass diese ein Lager bilden, das nur eine radiale Verschiebung zwischen zweitem Bauteil und zylinderförmiger Hülse bzw. viertem gegenüber drittem Bauteil verhindert.

In einer Weiterbildung des Aktors ist vorgesehen, dass das vierte Bauteil Bohrungen umfasst, die mit mindestens einem Stift, der fest mit der Kupplungsglocke verbunden ist, eine axial verschiebbare Verdrehsicherung bildet. Unter Verdrehsicherung wird hier eine Behinderung der Rotationsbewegung verstanden.

### Die Erfindung wird nachfolgend anhand der Fig. 1 bis 4 näher erläutert. Dabei zeigen:

- Fig. 1: eine Prinzipskizze erstes Ausführungsbeispiel eines Axialantriebes,
- Fig. 2: eine Prinzipskizze eines zweites Ausführungsbeispiel eines Axialantriebes,
- Fig. 3: einen Schnitt durch ein Ausführungsbeispiel einer Federspindel,
- Fig. 4: einen Schnitt durch einen erfindungsgemäßen Axialantrieb

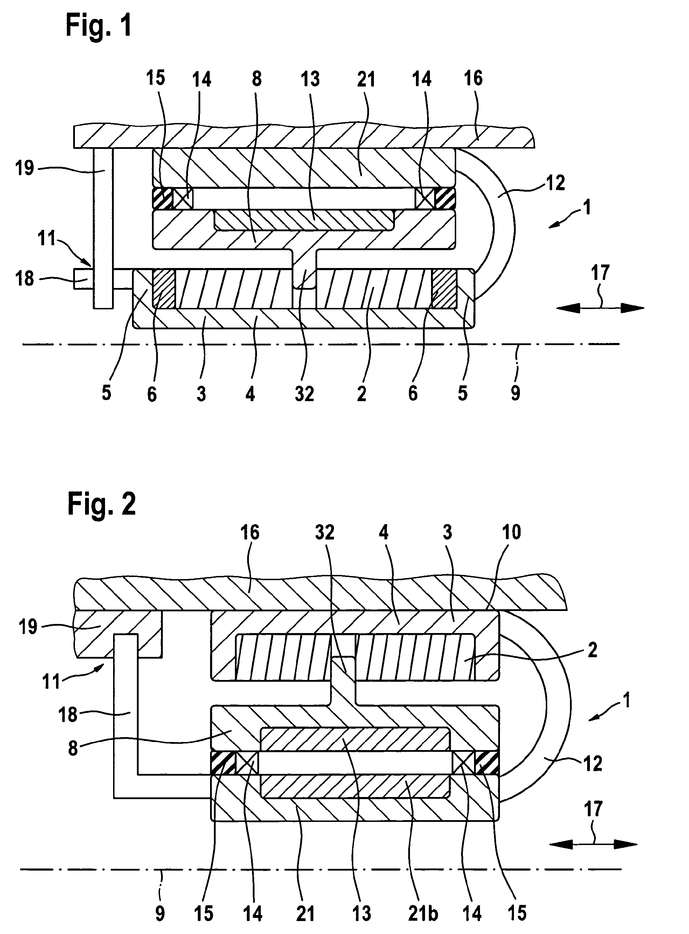

Fig. 1 und 2 zeigen die grundsätzliche Anordnung eines erfindungsgemäßen Axialantriebes 1. Dieser ist im wesentlichen Rotationssymmetrisch zu einer Symmetrieachse 9, daher ist jeweils nur ein Teilschnitt in Fig. 1 und 2 dargestellt. Der Axialantrieb 1 umfasst im Wesentlichen eine Schraubenfeder 2, die in einem zweiten Bauteil 3 drehfest angeordnet ist. Das zweite Bauteil 3 besteht im Wesentlichen aus einem zylinderförmigen Teil 4, das an beiden axialen Enden jeweils radial verlaufende Teller 5 aufweist. Die Schraubenfeder 2 ist an den Tellern 5 jeweils mit Federelementen 6 gelagert, so dass die Schraubenfeder 2 gegenüber dem zweiten Bauteil 3 in axialer Richtung gegen die Kraft der Federelemente 6 in geringem Maße verschiebbar und so axial elastisch gegenüber dem zweiten Bauteil 3 gelagert ist. In die Windungen der Schraubenfeder 12 greift eine Stift 32 ein, der fest mit einem ersten Bauteil 8 verbunden ist. Das erste Bauteil 8 und damit der Stift 32 sind gegenüber dem zweiten Bauteil 3 um eine Rotationsachse 9, die gleichzeitig Symmetrieachse des Axialantriebes ist, drehbar angeordnet. In der Darstellung der Fig. 1 ist dabei das zweite Bauteil 3 radial innerhalb des ersten Bauteiles 8 angeordnet, in dem Ausführungsbeispiel der Fig. 2 ist dieses genau umgekehrt, das heißt das zweite Bauteil 3 ist radial außerhalb des ersten Bauteiles 8 angeordnet. Erstes Bauteil 8, zweites Bauteil 3 und die damit zusammenwirkenden Teile sind in einem Gehäuse 16 angeordnet. In beiden Fällen ist aber das zweite Bauteil 3 bezüglich einer Rotation um die Rotationsachse 9 und damit gegenüber dem Gehäuse 16 festgelegt. In dem Ausführungsbeispiel der Fig. 2 erfolgt dies durch eine gehäusefeste Lagerung 10, in dem Ausführungsbeispiel gemäß Fig. 1 erfolgt dies entweder durch eine Verzahnung 11 oder durch einen Gummibalg 12, die nachfolgend näher dargestellt werden.

Beim Ausführungsbeispiel der Fig. 1 ist das erste Bauteil 8 radial außerhalb des zweiten Bauteiles 3 angeordnet und gegenüber einem Stator 21 drehbar gelagert. Die Lagerung erfolgt beispielsweise mittels Kugellagern 14, die beispielsweise mit Dichtringen 15, dies können Simmerringe oder Labyrinthdichtungen oder dergleichen sein, nach außen hin abgedichtet sind. Wird die Verdrehsicherung des zweiten Bauteiles 3 gegenüber dem Gehäuse 16 mittels Gummibälgen 12 realisiert, so kann auf Dichtringe 15 verzichtet werden. Der Stator 21 ist im Ausführungsbeispiel der Fig. 1 gehäusefest, das heißt sowohl axial entlang der Rotationsachse 9 als auch in Verdrehrichtung der Rotationsachse 9 mit dem Gehäuse fest verbunden. Der Stator 21 trägt eine Statorwicklung 21 b, die im Zusammenhang mit dem ersten Bauteil 8 als Rotor sowie einer daran angeordneten Rotorwicklung 13 einen Elektromotor als Drehantrieb 7 bilden. Wird also der Stator 21 bestromt, so wird das zweite Bauteil 8 dadurch in Rotation um die Rotationsachse 9 versetzt. Da der Stift 32 mit dem ersten Bauteil 8 verbunden ist, bewegt sich dieser durch das Federpaket der Schraubenfeder 12. Dadurch wird die Schraubenfeder 2 zusammen mit dem zweiten Bauteil 3 in axialer Richtung, dies ist in Fig. 1 und 2 durch einen Doppelpfeil 17 angedeutet, bewegt.

Fig. 2 zeigt eine alternative Anordnung von erstem Bauteil 8 und zweitem Bauteil 3 und damit auch dem Stator 21. Hier ist der Stator 21 in radialer Richtung gesehen das innerste Element, radial außerhalb des Stators 21 ist das erste Bauteil 8 angeordnet, weiter radial außerhalb ist das zweite Bauteil 3 mit der Schraubenfeder 2 angeordnet. Während also bei der Fig. 1 sich der Stift 32 von dem ersten Bauteil 8 radial nach innen erstreckt, erstreckt sich der Stift 32 in der Ausführungsform der Fig. 2 radial nach außen. In der Ausführungsform gemäß Fig. 1 ist daher das erste Bauteil 8 zusammen mit dem Stator 21 axial festgelegt, wobei das zweite Bauteil 3 zusammen mit der Schraubenfeder 2 in axialer Richtung verschoben wird, das Ausführungsbeispiel der Fig. 2 ist dem gegenüber eine kinematische Umkehrung, das heißt, Stator 21 und erstes Bauteil 8 sind in axialer Richtung verschieblich angeordnet während das zweite Bauteil 3 zusammen mit der Schraubenfeder 2 in axialer Richtung festgelegt sind. Die Stromzuführung für den Stator 21 ist in beiden Fällen nicht dargestellt.

In den Fig. 1 und 2 sind jeweils in der gleichen Zeichnung zwei unterschiedliche Ausführungsbeispiele für die Festlegung des jeweils inneren Bauteiles gegenüber der Rotation dargestellt. Im jeweils linken Bereich dargestellt ist die Festlegung mit einer Verzahnung, das heißt sowohl das innere Bauteil, in der Darstellung der Fig. 1 das zweite Bauteil, in der Darstellung der Fig. 2 der Stator 21, sind mit einem ersten Verzahnungselement 18 versetzen, entsprechend ist das Gehäuse mit einem zweiten Verzahnungselement 19 versehen. Die Verzahnungen können im einfachsten Fall eine Gabel sein, die eine Schiene umfasst oder zahnradartige Verzahnungselemente. Die Verzahnung 11 gewährleistet eine Festlegung des jeweils inneren Elementes gegenüber einer Verdrehung um die Rotationsachse 9, wobei eine axiale Verschiebbarkeit bezüglich der Rotationsachse 9 gewährleistet bleibt. Im rechten Bereich beider Zeichnungen ist eine alternative Ausführungsform der Verdrehsicherung dargestellt. Hier wird zur Verdrehsicherung ein Gummibalg 12 eingesetzt, der in der Ausführungsform der Fig. 1 auf der einen Seite gehäusefest mit dem Gehäuse 16 verbunden ist, auf der anderen Seite fest mit dem zweiten Bauteil 3 verbunden ist. Entsprechend ist bei der Ausführungsform gemäß Fig. 2 der Gummibalg auf der einen Seite gehäusefest und auf der anderen Seite fest mit dem Stator 21 verbunden. Ein derartiger Gummibalg 12 ist auf beiden Seiten angeordnet, bei Verwendung eines Gummibalges 12 wird also in den Darstellungen der Fig. 1 und 2 die Verzahnung 11 jeweils durch einen Gummibalg ersetzt. Zur Vereinfachung wurden beide Fälle der Verdrehsicherung in jeweils der gleichen Zeichnung dargestellt. Nicht dargestellt in Fig. 1 und 2 sowie in den nachfolgenden Ausführungsbeispielen sind jeweils die elektrischen Komponenten wie Zuleitungen und dergleichen. Kugellager und Wicklungen des elektrischen Antriebes sind nur schematisch angedeutet.

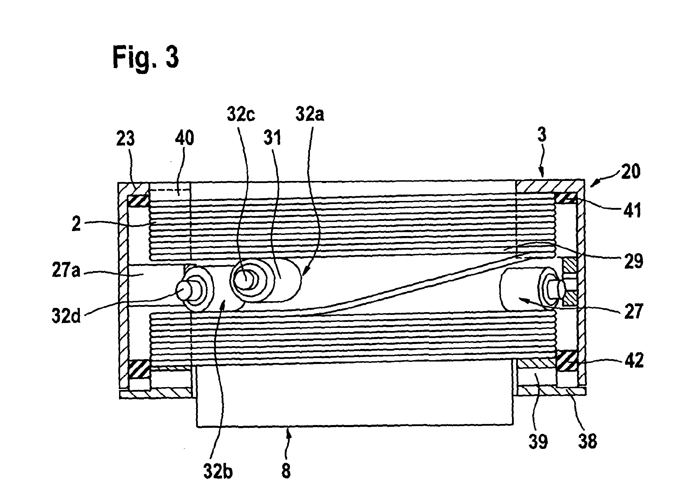

Fig. 3 zeigt ein Ausführungsbeispiel einer Federspindel 20 im Detail. Das Ausführungsbeispiel der Fig. 1 und 2 ist nicht einschränkend auf die Anordnungs- und Ausgestaltungsmöglichkeiten der Federspindel 20 als grundlegende Getriebeeinheit eines erfindungsgemäßen Axialantriebs zu betrachten.

Die Federspindel 20 setzt sich im wesentlichen aus dem Bauteil 3 mit der drehfest mit diesem verbundenen Schraubenfeder 2 und dem Bauteil 8 mit den von radial innen in die Schraubenfeder 2 eingreifenden Eingriffsmittel 27, die aus einem Satz 32a über den Umfang verteilter Stifte 32c und einem Satz 32b über den Umfang verteilter Stifte 32d gebildet werden, wobei diese gegenüber den Stiften 32a in Umfangsrichtung in axiale Richtung versetzt sind, zusammen. Die Stifte 32c, 32d stehen mit dem Federband 29 mittels eines Wälzlagers 31, das auf den Stiften positioniert ist, in axialem Kontakt, wobei jeweils der Satz Stifte 32a für die Schub- und der Satz 32b für die Zugrichtung des Axialantriebs verwendet wird. Die Stiftsätze 32a, 32b können jeweils in Umfangsrichtung gewindeartig an den Verlauf des Federbandes 29 angepasst sein, so dass das Federband in jedem Umfangsabschnitt spielfrei abgestützt wird. Die Stiftsätze 32a, 32b sind gegeneinander vorzugsweise um eine Federbandbreite axial versetzt und sind an einem Längsende im Bauteil 8 und am anderen Ende in einem mittels - nicht näher dargestellter - Stege mit dem Bauteil 8 fest verbundenen Flansch 27a aufgenommen.

In dem gezeigten Ausführungsbeispiel ist das Bauteil 8 radial innerhalb des Bauteils 3 angeordnet. Das hülsenförmige Bauteil 3 weist an einem Ende einen radial nach innen gerichteten Ansatz 23 auf, an dem sich die Schraubenfeder 2 an dem einen Ende abstützt, und ist am anderen Ende mit einem Deckel 38 beispielsweise mittels eines Gewindes, eines Bajonettverschlusses, eines Presssitzes oder dergleichen verschlossen, wobei sich das andere Ende der Schraubenfeder 2 an dem Deckel 38 abstützt. Dabei kann es insbesondere bei Drehverschlüssen von Vorteil sein, wenn zwischen Deckel 38 und Schraubenfeder 2 eine verdrehbare Verbindung, beispielsweise mittels eines Wälzlagers 39 vorgesehen ist.

Die Schraubenfeder 2 ist mit dem Deckel 38 und/oder mit dem Ansatz 23 drehfest verbunden, beispielsweise vernietet oder - wie gezeigt - in einer Ausnehmung 40 des Ansatzes 23 eingehängt, wobei das Federende in der Ausnehmung umgelegt sein kann.

Zur Vermeidung von harten Anschlägen an den Enden des Verdrehbereichs der Federspindel 20 sind vorzugsweise - zur Vermeidung eines Festlaufens - elastischen Anschlagringe 41, 42 vorgesehen, gegen die der Flansch 27a bei Maximalverdrehung der beiden Bauteile 11, 3 läuft.

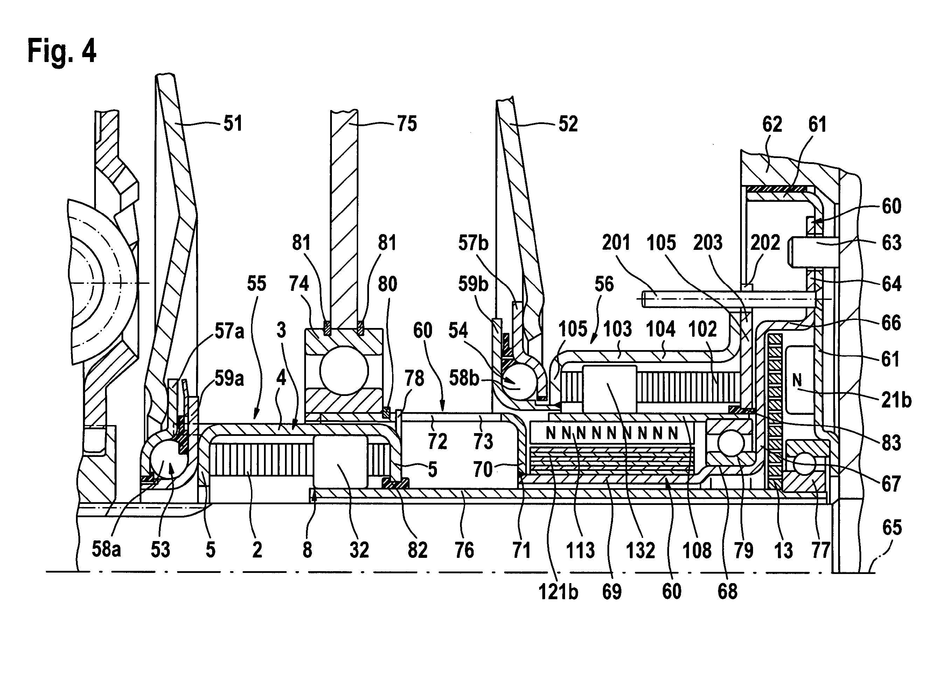

Figur 4 zeigt einen Aktor zur Betätigung einer als solches nicht näher dargestellten Doppelkupplung. Eine Symmetrieachse 65 als Rotationssymmetrieachse in der Darstellung der Figur 4 ist gleichzeitig die Rotationsachse oder Drehachse der Kupplungen, der Kurbelwelle, der Getriebeeingangswelle. Eine nicht dargestellte erste Kupplung wird mittels einer ersten Tellerfeder 51 betätigt, entsprechend wird eine zweite ebenfalls nicht dargestellte Kupplung der Doppelkupplung mittels einer zweiten Tellerfeder 52 betätigt. Die erste Tellerfeder 51 wird über ein erstes Ausrücklager 53 von einem ersten Axialantrieb 55 betätigt, entsprechend wird die zweite Tellerfeder 52 über ein zweites Ausrücklager 54 von einem zweiten Axialantrieb 56 betätigt. Beide Ausrücklager umfassen jeweils einen mit der ersten bzw. zweiten Tellerfeder 51, 52 mit rotierenden ersten Gehäuseteil 57a bzw. 57b, eine Vielzahl von Rollen oder Kugeln 58a, 58b sowie einen nicht mit rotierenden zweiten Gehäuseteil 59a, 59b.

Mit einer Kupplungsglocke 62, die in Figur 4 nur schematisch angedeutet ist, ist ein Trägerring 61 fest verbunden, zum Beispiel verschweißt, verpresst, vernietet oder verschraubt. Mit dem Trägerring 61 ist ein Trägerelement 60 verbunden, beispielsweise verschweißt, verpresst, vernietet oder verschraubt. Zusätzlich können Bolzen 63 zur Verdrehsicherung dienen. Das Trägerelement 60 ist mit einem sich im Wesentlichen radial erstreckenden getriebeseitigen Radialflansch 64 mit dem Trägerring 61 verbunden. Der getriebeseitige radiale Flansch 64 geht in einen sich bezüglich der Symmetrieachse 65 axial erstreckenden getriebeseitigen axialen Flansch 66 über, der wiederum in einen zweiten radialen Flansch 67 übergeht. Der zweite radiale Flansch 67 wiederum geht über in einen Lagersitz 68, der wiederum in einen sich axial erstreckenden Statorsitz 69 übergeht. Der Durchmesser des Lagersitzes 68 ist dabei größer als der Durchmesser des Statorsitzes 69. Der Lagersitz 68 wiederum geht über in einen dritten radialen Flansch 70, der sich vom Statorsitz 69 aus gesehen radial nach außen erstreckt. Der dritte radiale Flansch 70 ist mit dem Statorsitz 69 an einer Schweißnaht 71 verschweißt, so dass sich die später dargestellten von dem Statorsitz 69 und dem Lagersitz 68 getragenen Bauteile montieren lassen und der Trägerring 61 danach aus zwei Bauteilen bestehend verschweißt wird. Der dritte radiale Flansch 70 geht über in einen kupplungsseitigen axialen Flansch 72, der über den Umfang verteilt mehrere Langlochbohrungen aufweist. Am kupplungsseitigen Ende des kupplungsseitigen axialen Flansches 72 ist ein Kugellager 74 angeordnet, das sich an einem mit dem Kupplungsscheiben und damit den Tellerfedern 51, 52 mitrotierenden Lagerring 75 abstützt. Das Kugellager 74 dient der radialen Festlegung des Trägerringes 61, da sich dieser in axialer Baurichtung über eine größere Baulänge erstreckt und daher in radialer Richtung leicht verformbar ist. Radial innerhalb des kupplungsseitigen axialen Flansches 72 ist ein zweites Bauteil 3, welches entsprechend der Darstellung der Figur 1 ein zylinderförmiges Teil 4 ist, das axial an beiden Seiten durch Teller 5 begrenzt wird und eine Schraubenfeder 2 trägt, gelagert. Entsprechend der Darstellung der Figur 1 ist auch in dem Ausführungsbeispiel der Figur 4 das zweite Bauteil 3 in axialer Richtung beweglich und wird von einem in axialer Richtung festgelegten Stift 32 bei dessen Rotation in axialer Richtung bewegt. Der Stift 32 ist angeordnet an einem ersten Bauteil 8, welches eine zylinderförmige Hülse 76 umfasst, die in etwa die gleiche axiale Länge wie das Trägerelement 60 aufweist und getriebegehäuseseitig von einem zweiten Kugellager 77 gelagert wird. Im Bereich des zweiten Kugellagers 77 erstreckt sich radial nach außen eine Rotorwicklung 13, die mit einer Statorwicklung 21 b, die fest an dem Trägerring 61 angeordnet ist, bei dem elektrischen Antrieb für das erste Bauteil 8 bilden. Die Rotorwicklung 13 ist mit einem hier nicht dargestellten Kommutator verbunden der von hier nicht dargestellten Bürsten mit Gleichstrom versorgt wird. Das zweite Bauteil 3 ist mittels radial an dem getriebegehäuseseitigen Teller 5 nach außen ragenden Nasen 78, die in die Langlöcher 73 eingreifen, gegenüber dem Trägerelement 60 axial verschiebbar, aber gegen Rotation festgelegt. Durch Bestromung der Rotorwicklung 13 wird eine Kraft auf diese ausgeübt, die diese zusammen mit dem damit fest verbundenen ersten Bauteil 8 in Rotation versetzen, so dass sich wie anhand der Figur 1 dargestellt, das zweite Bauteil 3 in axialer Richtung verschiebt und so die erste Tellerfeder 51 betätigt.

Der zweite Axialantrieb 56 ist sinngemäß ähnlich aufgebaut. Zur Unterscheidung der Bezeichnungen gegenüber dem ersten Axialantrieb werden hier die Bezeichnungen drittes und viertes Bauteil verwendet, wobei das dritte Bauteil dem ersten Bauteil gemäß Figur 1 und das vierte Bauteil dem zweiten Bauteil gemäß Figur 1 entspricht. Der zweite Axialantrieb 56 umfasst ein viertes Bauteil 103, welches mit einem zylinderförmigen Teil 104 sowie das zylinderförmige Bauteil 104 an beiden axialen Enden abschließende Teller 105 eine Schraubenfeder 102 einfasst. Das vierte Bauteil ist entsprechend dem zweiten Bauteil axial verschiebbar, aber gegen Rotation festgelegt, dies erfolgt mittels mehrerer Stifte 201, die in Aussparungen oder Bohrungen 202 von radial nach außen ragenden Verlängerungen 203 des getriebeseitigen Tellers 105 eingreifen. Ein drittes Bauteil 108 trägt einen Stift 132, der in die Schraubenfeder 102 eingreift. Das dritte Bauteil 108 ist mittels eines dritten Kugellagers 79, das sich an dem Lagersitz 68 abstützt, drehbar gelagert. Auf der Innenseite des dritten Bauteils 108 befindet sich eine zweite Rotorwicklung 113, die mit einer Statorwicklung 121 b, die in dem Statorsitz 69 angeordnet ist, einen elektrischen Antrieb bildet. Es handelt sich hier also um einen bürstenlosen Elektroantrieb.

Durch Bestromung der Statorwicklung 21 b kann somit der erste Axialantrieb 55 zur Betätigung der ersten Tellerfeder 51 angetrieben werden, durch Bestromung der zweiten Statorwicklung 121 b kann der zweite Axialantrieb 56 zur Betätigung der zweiten Tellerfeder 52 angetrieben werden.

Das Kugellager 74 ist mit einem Sprengring 80 an dem Trägerelement 60 in getriebegehäuseseitiger Richtung festgelegt, mit zwei beiderseits des Lagerringes 75 in den Außenring des Kugellagers 74 eingebrachte Sprengringe 81 legen dieses gegenüber dem Lagerring 75 fest.

Der getriebegehäuseseitige Teller 5 des zweiten Bauteils 3 stützt sich mit einem Dichtungsschuh 82 an dem ersten Bauteil 8 ab. Der Dichtungsschuh 82 ist mit dem Teller 5 fest verbunden, aber gegenüber dem ersten Bauteil 8 sowohl axial als auch in Umfangsrichtung verschiebbar. Der Dichtungsschuh 82 kann beispielsweise eine Gummitülle, ein Bauteil aus Filz oder ein teflonbeschichtetes Metallbauteil sein.

Der getriebegehäuseseitige Teller 105 des vierten Bauteils 103 stützt sich mit einem zweiten Dichtungsschuh 83 an dem dritten Bauteil 108 ab. Der zweite Dichtungsschuh 83 ist mit dem Teller 105 fest verbunden, aber axial sowie in Umfangsrichtung gegenüber dem dritten Bauteil 108 verschiebbar, ähnlich wie dies bei dem Dichtungsschuh 82 der Fall ist. Der zweite Dichtungsschuh 83 kann aus den gleichen wie bei dem Dichtungsschuh 82 genannten Materialien gefertigt sein.

### Bezugszeichenliste

- 1: Axialantrieb
- 2: Schraubenfeder
- 3: Zweites Bauteil
- 4: Zylinderförmiges Teil
- 5: Teller
- 6: Federelement
- 7: Drehantrieb
- 8: Erstes Bauteil
- 9: Rotationsachse/Symmetrieachse
- 10: Gehäusefeste Lagerung
- 11: Verzahnung
- 12: Gummibalg
- 13: Rotor
- 14: Kugellager
- 15: Dichtringe
- 16: Gehäuse
- 17: Doppelpfeil
- 18: Erstes Verzahnungselement
- 19: Zweites Verzahnungselement
- 20: Federspindel
- 21: Stator
- 21 b: Statorwicklung
- 22a: Flansch
- 23: Ansatz
- 27: Eingriffsmittel
- 27a: Flansch
- 29: Federband
- 31: Wälzlager
- 38: Deckel
- 39: Wälzlager
- 40: Ausnehmung
- 41, 42: Anschlagring
- 51: Erste Tellerfeder
- 52: Zweite Tellerfeder
- 53: Erstes Ausrücklager
- 54: Zweites Ausrücklager
- 55: Erster Axialantrieb
- 56: Zweiter Axialantrieb
- 57a,b: Erstes Gehäuseteil der Ausrücklager
- 58a,b: Kugeln der Ausrücklager
- 59a,b: Zweites Gehäuseteil der Ausrücklager
- 60: Trägerelement
- 61: Trägerring
- 62: Kupplungsglocke
- 63: Bolzen
- 64: Getriebeseitiger radialer Flansch
- 65: Symmetrieachse
- 66: Getriebeseitiger axialer Flansch
- 67: Zweiter radialer Flansch
- 68: Lagersitz
- 69: Statorsitz
- 70: Dritter radialer Flansch
- 71: Schweißnaht
- 72: Kupplungsseitiger axialer Flansch
- 73: Langloch
- 74: Kugellager
- 75: Lagerring
- 76: zylinderförmige Hülse
- 77: Zweites Kugellager
- 78: Nase
- 79: Drittes Kugellager
- 80: Sprengring
- 81: Sprengring
- 82: Dichtungsschuh
- 83: Zweiter Dichtungsschuh
- 32,: Stift
- 32a,: Stifte
- 32b: Stifte
- 102: Schraubenfeder
- 103: viertes Bauteil
- 104: Zylinderförmiges Teil
- 105: Teller
- 108: Drittes Bauteil
- 113: Zweite Rotorwicklung
- 121 b: Statorwicklung
- 132: Stift
- 201: Stifte
- 202: Bohrungen
- 202: Bohrungen
- 203: Verlängerung

## Patentansprüche

1. Aktor zur Betätigung einer Doppelkupplung, wobei die Doppelkupplung eine erste Tellerfeder (51) mit einem ersten Ausrücklager (53) und eine zweite Tellerfeder (52) mit einem zweiten Ausrücklager (54) umfasst, **dadurch gekennzeichnet, dass** der Aktor einen ersten Antrieb (55) zur Erzielung einer ersten axialen Relativbewegung zwischen zwei in Umfangsrichtung verdrehbar angeordneten Bauteilen (3, 8), wobei zumindest ein bezüglich des ersten Bauteiles (8) fixiertes Eingriffsmittel (32) zwischen zumindest zwei benachbarte Windungen einer dem zweiten Bauteil (3) drehfest zugeordneten gewundenen ersten Feder (2) eingreift und zumindest ein Bauteil (3, 8) gegenüber dem anderen drehangetrieben ist, sowie einen zweiten Antrieb (56) zur Erzielung einer zweiten axialen Relativbewegung zwischen zwei in Umfangsrichtung verdrehbar angeordneten dritten und vierten Bauteilen (108, 103), wobei zumindest ein bezüglich des dritten Bauteiles (108) fixiertes Eingriffsmittel (132) zwischen zumindest zwei benachbarte Windungen einer dem vierten Bauteil (103) drehfest zugeordneten gewundenen zweiten Feder (102) eingreift und zumindest ein Bauteil (103, 108) gegenüber dem anderen drehangetrieben ist, umfasst.

2. Aktor nach Anspruch 1, **dadurch gekennzeichnet, dass** das erste Bauteil (8) eine zylinderförmige Hülse (76) umfasst, die gegenüber einer Kupplungsglocke (62) drehbar gelagert ist und die kupplungsglockenseitig eine sich radial erstreckende Rotorwicklung (13) umfasst, die zusammen mit einer Statorwicklung (21b). einen elektrischen Antrieb bildet.

3. Aktor nach einem der vorhergehenden Ansprüche, **dadurch gekennzeichnet, dass** dieser ein Trägerelement (60) umfasst, welches starr mit der Kupplungsglocke (62) verbunden ist.

4. Aktor nach einem der vorhergehenden Ansprüche, **dadurch gekennzeichnet, dass** das Trägerelement (60) Mittel umfasst, die das zweite Bauteil (3) gegenüber einer Rotation festlegen.

5. Aktor nach dem vorhergehenden Anspruch, **dadurch gekennzeichnet, dass** die Mittel, die das zweite Bauteils (3) gegenüber einer Rotation festlegen, ein Langloch (73) in dem Trägerelement (60) und eine Nase (78) an dem ersten Bauteil (3) sind.

6. Aktor nach einem der vorhergehenden Ansprüche, **dadurch gekennzeichnet, dass** der zweite Antrieb (56) zur Erzielung einer axialen Bewegung eine zweite Rotorwicklung (113) umfasst, die sich in axialer Richtung entlang der Innenseite des dritten Bauteil (108) erstreckt.

7. Aktor nach dem vorhergehenden Anspruch, **dadurch gekennzeichnet, dass** die zweite Rotorwicklung (113) mit einer zweiten Statorwicklung (121 b), die an dem Trägerelement (60) angeordnet ist, einen elektrischen Antrieb bildet.

8. Aktor nach einem der vorhergehenden Ansprüche, **dadurch gekennzeichnet, dass** sich das zweite Bauteil (3) mit einem Dichtungsschuh (82) an der zylinderförmigen Hülse (76) abstützt.

9. Aktor nach einem der vorhergehenden Ansprüche, **dadurch gekennzeichnet, dass** sich das vierte Bauteil (103) mit einem zweiten Dichtungsschuh (83) an dem dritten Bauteil (108) abstützt.

10. Aktor nach einem der vorhergehenden Ansprüche, **dadurch gekennzeichnet, dass** das vierte Bauteil (103) Bohrungen (202) umfasst, die mit mindestens einem Stift (201), der fest mit der Kupplungsglocke (62) verbunden ist, eine axial verschiebbare Verdrehsicherung bildet.
